# EUROPEAN PATENT SPECIFICATION

(11) **EP 3 827 239 B1**
(45) Date of publication and mention of the grant of the patent: **19.07.2023**
(21) Application number: 19840355.2
(22) Date of filing: 23.07.2019
(51) Int. Cl.: G01M 3/04

(54) **AN INFRARED LEAK DETECTION SYSTEM**
INFRAROTLECKDETEKTIONSSYSTEM
SYSTÈME INFRAROUGE DE DÉTECTION DE FUITE

(30) Priority: 26.07.2018 US 201816045856
(43) Date of publication of application: 02.06.2021
(73) Proprietor: Qingdao Haier Refrigerator Co., Ltd., Laoshan District Qingdao Shandong 266101 (CN); Haier Smart Home Co., Ltd., Qingdao, Shandong 266101 (CN); Haier US Appliance Solutions, Inc., Wilmington, DE 19801 (US)
(72) Inventor: GASIOR, Bradford, Wilmington, DE 19801 (US); SALVI, Rushikesh, Wilmington, DE 19801 (US)
(74) Representative: Ziebig Hengelhaupt Intellectual Property Attorneys Patentanwaltsanwaltskanzlei PartGmbB
(86) International application number: PCT/CN2019/097313
(87) International publication number: WO 2020/020163

(56) References cited:
- WO-A2-2005/001409
- CN-A- 102 279 081
- CN-A- 102 279 081
- CN-A- 103 439 056
- CN-A- 106 017 820
- CN-A- 107 907 064
- CN-U- 206 104 837
- JP-A- H10 239 202
- US-A1- 2012 297 817
- US-A1- 2015 101 669
- US-A1- 2015 101 990
- US-B2- 8 935 938

## Description

### FIELD OF THE INVENTION

The present subject matter relates generally to leak detection systems, such as leak detection systems for appliances and filter assemblies.

### BACKGROUND OF THE INVENTION

Certain water filter assemblies include a manifold and a filter cartridge. The manifold directs unfiltered water into the filter cartridge and filtered water out of the filter cartridge. The filter cartridge includes a filter medium, such as an activated carbon block, a pleated polymer sheet, a spun cord material, or a melt blown material. The filter medium is positioned within the filter cartridge and filters water flowing through the filter cartridge.

Over time, the filter medium will lose effectiveness. For example, pores of the filter medium can become clogged or the filter medium can become saturated with contaminants. To insure that the filtering medium has not exceeded its filtering capacity, the filtering medium is preferably replaced or serviced at regular intervals regardless of its current performance. To permit replacement or servicing of the filter medium or the filter cartridge, the filter cartridge is generally removably mounted to the manifold.

Water leaks can form or develop at an interface or connection between the filter cartridge and the manifold, such as where the filter cartridge mounts to the manifold. As an example, such leaks can develop if the water filter assembly is installed incorrectly or is exposed to relatively high water pressures or freezing conditions. Such leaks can negatively affect operation of the water filter assembly and/or the refrigerator appliance and can cause damage if not prevented.

Leaks can also be difficult to detect. In particular, water filter assemblies are often positioned in relatively remote locations within refrigerator appliances such that visually monitoring the water filter assemblies for leaks can be difficult or infrequent. Similar problems can make detecting liquid water and water leaks difficult in other circumstances and locations as well.
Prior art document US 8,935,938 B2 discloses an assembly for filtering water including a housing, a water inlet for supplying unfiltered water to the housing, and a water filter including an outer casing attached to the housing in communication with the water inlet and a filter medium within the outer casing, the water filter filtering the unfiltered water through filter medium to provide filtered water.

Further, document WO 2005/001409 provides a passive infrared camera system adapted to provide a visual image of a chemical emanating from a component having the chemical therein. The passive infrared camera system includes a lens, are frigerated portion, and a refrigeration system, wherein the infrared sensor device is adapted to capture an infrared image from the lens.

### BRIEF DESCRIPTION OF THE INVENTION

Aspects and advantages of the invention will be set forth in part in the following description, or may be apparent from the description, or may be learned through practice of the invention.

In the present invention, a leak detection system for a water filter includes a filter cartridge with an infrared graphical index on an outer surface of the filter cartridge. An infrared camera is configured for capturing an image of the infrared graphical index on the outer surface of the filter cartridge. A controller is in operative communication with the infrared camera. The controller is configured for comparing the image of the infrared graphical index on the outer surface of the filter cartridge to a reference image. The controller is further configured for determining that the filter cartridge is leaking when a difference between the image of the infrared graphical index on the outer surface of the filter cartridge and the reference image is greater than a threshold difference.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 is a perspective view of a refrigerator appliance according to an example embodiment of the present subject matter with doors of the example refrigerator appliance shown closed.
FIG. 2 is a perspective view of the example refrigerator appliance with doors of the example refrigerator appliance shown open.
FIG. 3 is a schematic view of a filter assembly of the example refrigerator appliance of FIG. 2.
FIG. 4 is a reference image of a graphical index according to an example embodiment of the present subject matter.
FIGS. 5 and 6 are images of the graphical index of the filter assembly in various states.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

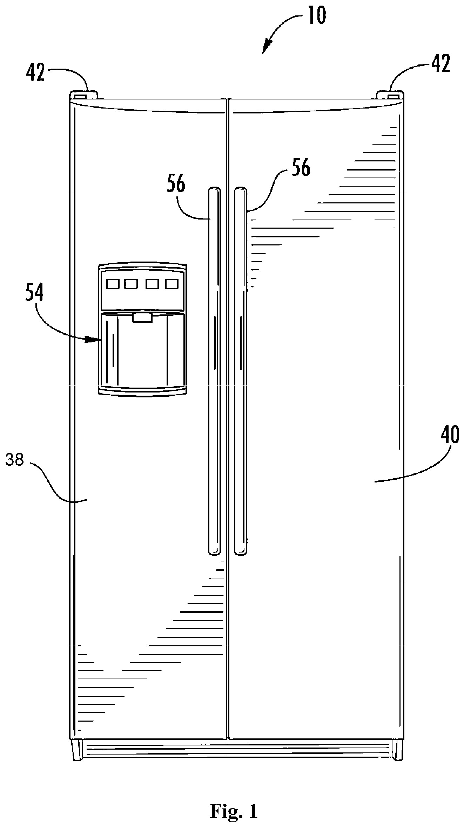

FIG. 1 is a perspective view of a refrigeration appliance 10 according to an exemplary embodiment of the present subject matter. Refrigerator appliance 10 may include a filter assembly 60 that includes features for detecting water leaks at filter assembly 60. It should be appreciated that refrigerator appliance 10 is provided for illustrative purposes only and that the present subject matter is not limited to any particular type, style, or configuration of refrigeration appliance, and may be used in or with any manner of refrigerator, freezer, refrigerator/freezer combination, and so forth. In addition, the leak detection system described herein may also be used in or with any suitable appliance, such as a water heater appliance, washing machine appliance, dishwasher appliance, etc., in alternative example embodiments.

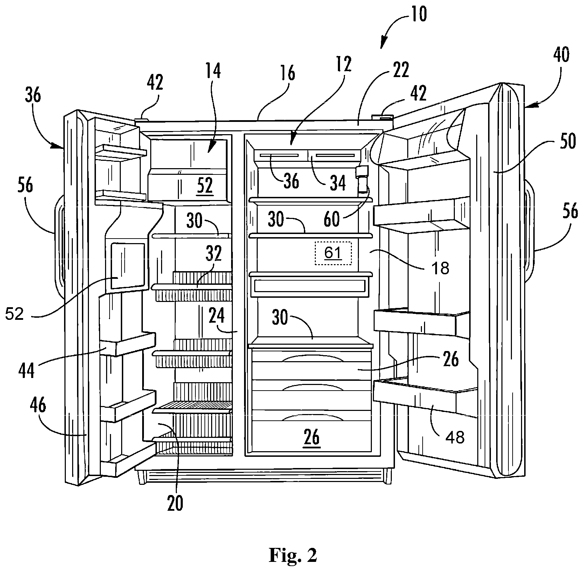

Referring to FIG. 2, refrigerator appliance 10 includes a fresh food storage compartment 12 and a freezer storage compartment 14, with the compartments arranged side-by-side and contained within an outer case 16 and inner liners 18 and 20 generally molded from a suitable plastic material. Thus, refrigerator appliance 10 is generally referred to as a side-by-side style refrigerator appliance. In alternative exemplary embodiments, refrigerator appliance 10 may include a single liner and a mullion that spans between opposite sides of the single liner to divide it into freezer storage compartment 14 and fresh food storage compartment 12. Outer case 16 is normally formed by folding a sheet of a suitable material, such as pre-painted steel, into an inverted U-shape to form top and side walls of outer case 16. A bottom wall of outer case 16 normally is formed separately and attached to the case side walls and to a bottom frame that provides support for refrigerator appliance 10.

A breaker strip 22 extends between a case front flange and outer front edges of inner liners 18 and 20. Breaker strip 22 is formed from a suitable resilient material, such as an extruded acrylo-butadiene-styrene based material (commonly referred to as ABS). The insulation in the space between inner liners 18 and 20 is covered by another strip of suitable resilient material, which also commonly is referred to as a mullion 24 and may be formed of an extruded ABS material. Breaker strip 22 and mullion 24 form a front face, and extend completely around inner peripheral edges of outer case 16 and vertically between inner liners 18 and 20.

Slide-out drawers 26 and shelves 30 are normally provided in fresh food storage compartment 12 to support items being stored therein. In addition, at least one shelf 30 and at least one wire basket 32 are also provided in freezer storage compartment 14.

Refrigerator appliance features are regulated with a controller 34 according to user preference via manipulation of a control interface 36 mounted in an upper region of fresh food storage compartment 12 and coupled to controller 34. Input/output ("I/O") signals may be routed between controller 34 and various operational components of refrigerator appliance 10. The components of refrigerator appliance 10 may be in communication with controller 34 via one or more signal lines or shared communication busses.

Controller 34 can be any device that includes one or more processors and a memory. As an example, in some embodiments, controller 34 may be a single board computer (SBC). For example, controller 34 can be a single System-On-Chip (SOC). However, any form of controller 34 may also be used to perform the present subject matter. The processor(s) can be any suitable processing device, such as a microprocessor, microcontroller, integrated circuit, or other suitable processing devices or combinations thereof. The memory can include any suitable storage media, including, but not limited to, non-transitory computer-readable media, RAM, ROM, hard drives, flash drives, accessible databases, or other memory devices. The memory can store information accessible by processor(s), including instructions that can be executed by processor(s) to perform aspects of the present disclosure.

A freezer door 38 and a fresh food door 40 close access openings to freezer storage compartment 14 and fresh food storage compartment 12. Freezer door and fresh food door 38 and 40 are each mounted by a top hinge 42 and a bottom hinge (not shown) to rotate about its outer vertical edge between an open position, as shown in FIG. 1, and a closed position. Freezer door 38 may include a plurality of storage shelves 44 and a sealing gasket 46, and fresh food door 40 also includes a plurality of storage shelves 48 and a sealing gasket 50.

Freezer storage compartment 14 may include an automatic ice maker 52 and a dispenser 54 provided in freezer door 38 such that ice and/or chilled water can be dispensed without opening freezer door 38, as is well known in the art. Freezer door and fresh food door 38 and 40 may be opened by handles 56.

As with known refrigerators, refrigerator appliance 10 also includes a machinery compartment (not shown) that at least partially contains components for executing a known vapor compression cycle for cooling air. The components include a compressor, a condenser, an expansion device, and an evaporator connected in series as a loop and charged with a refrigerant. The evaporator is a type of heat exchanger which transfers heat from air passing over the evaporator to the refrigerant flowing through the evaporator, thereby causing the refrigerant to vaporize. The cooled air is used to refrigerate one or more refrigerator or freezer compartments via fans. Also, a cooling loop can be added to direct cool the ice maker to form ice cubes, and a heating loop can be added to help remove ice from the ice maker. Collectively, the vapor compression cycle components in a refrigeration circuit, associated fans, and associated compartments are conventionally referred to as a sealed system. The construction and operation of the sealed system are well known to those skilled in the art.

Refrigerator appliance 10 also includes a filter assembly 60 for filtering water coming into refrigerator appliance 10 from a water supply (not shown), such as a municipal water source or a well. Filter assembly 60 can remove contaminants such as chlorine, chloroform, lead, arsenic, pharmaceuticals, microbes, and/or other undesirable substances from water supplied to refrigerator appliance 10. In particular, filter assembly 60 can supply filtered water to ice maker 52 and/or dispenser 54. As will be understood and used herein, the term "water" includes purified water and solutions or mixtures containing water and, e.g., elements (such as calcium, chlorine, and fluorine), salts, bacteria, nitrates, organics, and other chemical compounds or substances. As discussed in greater detail below, filter assembly 60 includes features for detecting water leaking from filter assembly 60.

Filter assembly 60 may be mounted within fresh food storage compartment 12. In particular, filter assembly 60 is mounted to inner liner 18 in the example embodiment shown in FIG. 2. However, it should be understood that filter assembly 60 may be positioned at any other suitable location within refrigerator appliance 10 in alternative example embodiments. For example, filter assembly 60 may be mounted in freezer door 38 or fresh food door 40. Thus, the position of filter assembly 60 shown in FIG. 2 is not intended to limit the present subject matter in any aspect and is provided by way of example only.

Refrigerator appliance 100 also includes a valve 61 as schematically shown in FIG. 2. Valve 61 is configured for regulating a flow of water to filter assembly 60. In particular, valve 61 selectively shifts between a closed position and an open position. Valve 61 permits the flow of water to filter assembly 60 in the open position. Thus, with valve 61 in the open position, water for filtering is supplied to filter assembly 60. Conversely, valve 61 obstructs or blocks the flow of water to filter assembly 60 in the closed position. Thus, with valve 61 in the closed position, water for filtering is not supplied to filter assembly 60 or is supplied to filter assembly 60 in an insubstantial volume. In such a manner, valve 61 can regulate the flow of water to filter assembly 60 by shifting between the open and closed positions.

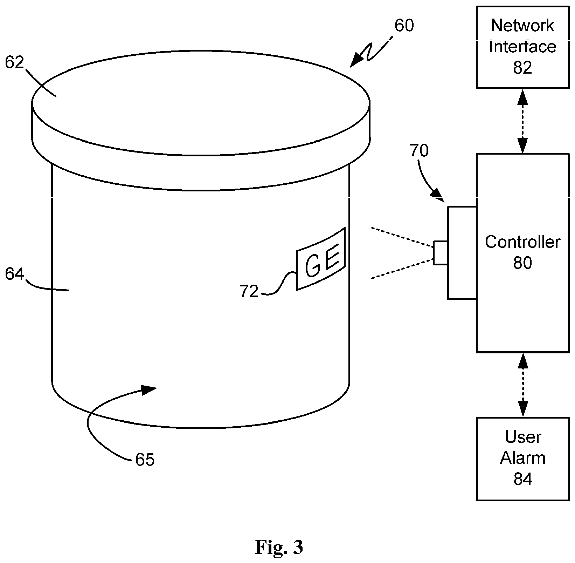

FIG. 3 is a schematic view of filter assembly 60. As may be seen in FIG. 3, filter assembly 60 includes a manifold 62 and a filter cartridge 64. Filter cartridge 64 may be mounted to manifold 62 in order to filter water passing through manifold 62. As a filtering capacity of filter cartridge 64 decreases or at regular intervals, filter cartridge 64 may be serviced or changed in order to insure continuous, effective filtering of water flowing through filter assembly 60.

Filter cartridge 64 includes an infrared (IR) graphical index 72. Infrared graphical index 72 is positioned on an outer surface 65 of filter cartridge 64. Infrared graphical index 72 is "visible" in the infrared spectrum. Thus, e.g., infrared graphical index 72 may include one or more infrared reflective surface(s) and one or more infrared absorbent surface(s) that collectively form a symbol or marking (such as a trademark, barcode, serial number, etc.) in the infrared spectrum on outer surface 65 of filter cartridge 64. As a particular example, at least a portion of infrared graphical index 72 may reflect infrared radiation having a wavelength between seven hundred nanometers (700 nm) and one thousand, one hundred nanometers (1100 nm) while another portion of infrared graphical index 72 may absorb infrared radiation having such wavelengths. In In the present application, infrared graphical index 72 is formed by printing infrared reflective ink onto outer surface 65 of filter cartridge 64. Infrared graphical index 72 may be invisible to the human eye in certain example embodiments.

Refrigerator appliance 10 also includes an infrared camera 70. Infrared camera 70 may be oriented towards infrared graphical index 72 when filter cartridge 64 is mounted on manifold 62. Thus, infrared camera 70 is operable to capture an image of infrared graphical index 72 on outer surface 65 of filter cartridge 64. Controller 34 in operative communication with infrared camera 70. Thus, e.g., controller 34 may receive an image of infrared graphical index 72 on outer surface 65 of filter cartridge 64 from infrared camera 70. Infrared camera 70 may be tuned to sense the IR reflectivity of infrared graphical index 72. Thus, e.g., infrared camera 70 may be tuned to capture an image from infrared radiation with wavelengths between seven hundred nanometers (700 nm) and one thousand, one hundred nanometers (1100 nm).

Utilizing the image of infrared graphical index 72 from infrared camera 70, controller 34 may determine when water is leaking from filter assembly 60. For example, controller 34 may compare the image of infrared graphical index 72 on outer surface 65 of filter cartridge 64 from infrared camera 70 to a reference image, and controller 34 may determine that filter cartridge 64 is leaking when a difference between the image of infrared graphical index 72 on outer surface 65 of filter cartridge 64 from infrared camera 70 and the reference image is greater than a threshold difference.

As an example, controller 34 may determine that water is leaking when a percent difference between the image of infrared graphical index 72 from infrared camera 70 and the reference image is greater than a threshold percent difference. The threshold percent difference may be selected to detect leaks while avoiding tripping of the leak detection system by condensation. Thus, e.g., the threshold percent difference may be no less five percent (5%), no less than ten percent (10%), etc. to avoid tripping of the leak detection system by condensation.

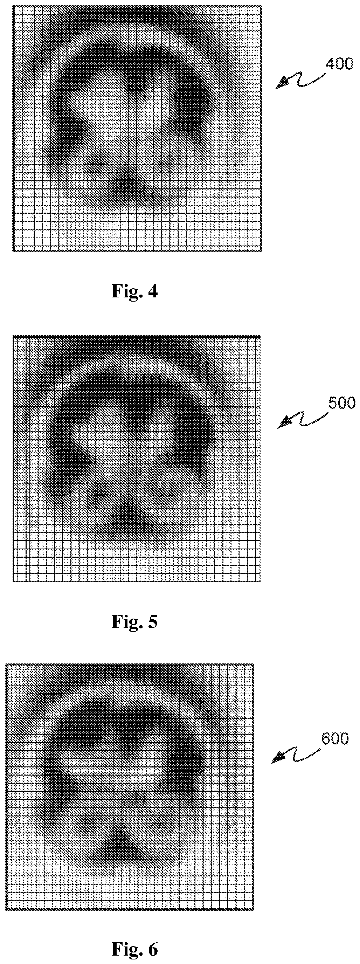

Turning to FIG. 4, an example reference image 400 is shown. The reference image may be stored in the memory of controller 34. As an example, a manufacturer of refrigerator appliance 10 may save the reference image in the memory of controller 34 during manufacture of refrigerator appliance 10. As another example, the reference image may be saved in the memory of controller 34 by a user of refrigerator appliance 10. For example, the user may command controller 34 to save an image of infrared graphical index 72 on outer surface 65 of filter cartridge 64 from infrared camera 70 into the memory of controller 34 as the reference image when the filter assembly 60 is not leaking. As may be seen from the above, the reference image may correspond to an image of infrared graphical index 72 when filter assembly 60 is not leaking such that the reference image may be used as a standard of comparison during subsequent leak detraction operations.

Turning to FIGS. 5 and 6, images 500, 600 of infrared graphical index 72 from infrared camera 70 in various states are shown. In FIG. 5, image 500 of infrared graphical index 72 from infrared camera 70 is taken when filter assembly 60 is not leaking and/or infrared graphical index 72 is dry. Thus, the image 500 of infrared graphical index 72 from infrared camera 70 generally corresponds to the reference image 400 in FIG. 4. When the infrared camera 70 takes the image 500 and controller 34 compares the image 500 to the reference image 400, controller 34 determines that filter cartridge 64 is not leaking because the difference between the image 500 and the reference image 400 is not greater than the threshold difference. In particular, the percent difference between the image 500 and the reference image 400 may not be greater than the threshold percent difference, e.g., five percent (5%).

Conversely, in FIG. 6, image 600 of infrared graphical index 72 from infrared camera 70 is taken when filter assembly 60 is leaking and/or infrared graphical index 72 is wet. Thus, the image 600 of infrared graphical index 72 from infrared camera 70 generally differs from the reference image 400 in FIG. 4 due to the presence of liquid water on infrared graphical index 72 that distorts the image 600 relative to the reference image 400. When the infrared camera 70 takes the image 600 and controller 34 compares the image 600 to the reference image 400, controller 34 determines that filter cartridge 64 is leaking because the difference between the image 600 and the reference image 400 is greater than the threshold difference. In particular, the percent difference between the image 600 and the reference image 400 may be greater than the threshold percent difference, e.g., five percent (5%).

When controller 34 determines that filter assembly 60 is leaking, various remedial actions may be taken. For example, controller 34 may close valve 61 in response to controller 34 determining that filter assembly 60 is leaking. Thus, the flow of water to filter assembly 60 may be blocked with valve 61 when filter assembly 60 is leaking. In addition or as an alternative to closing valve 61, controller 34 may also alert a user that filter assembly 60 is leaking. For example, refrigerator 10 may include a network interface 82. Network interface 82 of refrigerator 10 may include transmitters, receivers, ports, controllers, antennas, or other suitable components for interfacing with one more networks. Thus, controller 34 may transmit a leak alert via network interface 82 to a user of refrigerator appliance 10 in response to controller 34 determining that filter assembly 60 is leaking. The leak alert may be one or more of a text message, an email and a phone message. As another example, refrigerator 10 may include a user alarm 84, e.g., on refrigerator 10. The user alarm 84 may one or more of a speaker and a light emitter. Controller 34 may activate user alarm 84 in response to controller 34 determining that filter assembly 60 is leaking. Thus, refrigerator 10 may include an audible and/or visual alarm for alerting a user when filter assembly 60 is leaking.

As may be seen from the above, refrigerator appliance 10, may use an infrared camera 70 positioned within reading distance of a filter cartridge 64 that has an infrared graphical index 72, e.g., made with IR reflective ink or substance, to detect when liquid water is present on the outer surface 65 of filter cartridge 64 resulting in leak detection. Infrared camera 70 may be low resolution and inexpensive compared to high resolution full color cameras that can identify liquid water using other known methods. In addition, infrared camera 70 may require less processing power for controller 34 compared to such high resolution full color cameras and other known methods for leak detection.

## Claims

1. A leak detection system for a water filter, comprising:
a filter cartridge (64) with an infrared graphical index (72) on an outer surface (65) of the filter cartridge (64);
an infrared camera (70) configured for capturing an image (500, 600) of the infrared graphical index (72) on the outer surface (65) of the filter cartridge (64); **characterized by**
a controller (34) in operative communication with the infrared camera (70), the controller (34) configured for comparing the image (500, 600) of the infrared graphical index (72) on the outer surface (65) of the filter cartridge (64) to a reference image (400), the reference image (400) being an image of the infrared graphical index (72) on the outer surface (65) of the filter cartridge (64) from the infrared camera (70) when the filter cartridge (64) is not leaking, the controller (34) further configured for determining that the filter cartridge (64) is leaking and liquid water is present on the outer surface (65) of the filter cartridge (64) when a difference between the image (500, 600) of the infrared graphical index (72) on the outer surface (65) of the filter cartridge (64) and the reference image (400) is greater than a threshold difference, said difference reflecting the distortion of the image (500, 600) relative to the reference image (400) due to the presence of liquid water on the infrared graphical index (72), further comprising a supply valve operable to block a flow of water to the filter cartridge (64), the controller (34) configured for closing the supply valve in response to the controller (34) determining that the filter cartridge (64) is leaking, wherein the controller (34) is configured for transmitting a leak alert via a network interface (82) in response to the controller (34) determining that the filter cartridge (64) is leaking,
wherein the infrared graphical index (72) comprises an infrared reflective surface and an infrared absorbent surface, wherein the infrared graphical index (72) comprises an infrared reflective ink printed onto the outer surface (65) of the filter cartridge (64).

2. The leak detection system of claim 1, wherein the leak alert is one or more of a text message, an email and a phone message.

3. The leak detection system of claim 1, wherein the controller (34) is configured for activating a user alarm (84) in response to the controller (34) determining that the filter cartridge (64) is leaking,
wherein the user alarm (84) is one or more of a speaker and a light emitter.

4. The leak detection system of claim 1, wherein the reference image (400) is stored in a memory of the controller (34).

5. A method for detecting leaks in a water filter, comprising:
capturing an image (500, 600) of an infrared graphical index (72) on an outer surface (65) of a filter cartridge (64) with an infrared camera (70);
comparing the image (500, 600) of the infrared graphical index (72) on the outer surface (65) of the filter cartridge (64) to a reference image (400) with a controller (34), the reference image (400) being an image of the infrared graphical index (72) on the outer surface (65) of the filter cartridge (64) from the infrared camera (70) when the filter cartridge (64) is not leaking; and
determining that the filter cartridge (64) is leaking and liquid water is present on the outer surface (65) of the filter cartridge (64) when a difference between the image (500, 600) of the infrared graphical index (72) on the outer surface (65) of the filter cartridge (64) and the reference image (400) is greater than a threshold difference, said difference reflecting the distortion of the image (500, 600) relative to the reference image (400) due to the presence of liquid water on the infrared graphical index (72), further comprising closing a supply valve to block a flow of water to the filter cartridge (64) in response to the controller (34) determining that the filter cartridge (64) is leaking, further comprising transmitting a leak alert via a network interface (82) in response to the controller (34) determining that the filter cartridge (64) is leaking,
wherein the infrared graphical index (72) comprises an infrared reflective surface and an infrared absorbent surface, wherein the infrared graphical index (72) comprises an infrared reflective ink printed onto the outer surface (65) of the filter cartridge (64).

6. The method of claim 5, wherein the leak alert is one or more of a text message, an email and a phone message.

7. The method of claim 5, further comprising activating a user alarm (84) in response to the controller (34) determining that the filter cartridge (64) is leaking,
wherein the user alarm (84) is one or more of a speaker and a light emitter.

8. The method of claim 5, wherein the reference image (400) is stored in a memory of the controller (34).

## Patentansprüche

1. Leckdetektionssystem für einen Wasserfilter, umfassend:
eine Filterpatrone (64) mit einem infraroten grafischen Index (72) auf einer Außenfläche (65) der Filterpatrone (64);
eine Infrarotkamera (70), die zum Erfassen eines Bildes (500, 600) des infraroten grafischen Index (72) auf der Außenfläche (65) der Filterpatrone (64) eingerichtet ist; **gekennzeichnet durch**
ein Steuergerät (34) in betriebsmäßiger Kommunikation mit der Infrarotkamera (70), wobei das Steuergerät (34) eingerichtet ist zum Vergleichen des Bildes (500, 600) des infraroten grafischen Index (72) auf der Außenfläche (65) der Filterpatrone (64) mit einem Referenzbild (400), das Referenzbild (400) ein von der Infrarotkamera (70) aufgenommenes Bild des infraroten grafischen Index (72) auf der Außenfläche (65) der Filterpatrone (64) bei nicht leckender Filterpatrone (64) ist, das Steuergerät (34) ferner eingerichtet ist zum Bestimmen, dass die Filterpatrone (64) leckt und flüssiges Wasser auf der Außenfläche (65) der Filterpatrone (64) vorhanden ist, wenn ein Unterschied zwischen dem Bild (500, 600) des infraroten grafischen Index (72) auf der Außenfläche (65) der Filterpatrone (64) und dem Referenzbild (400) größer als ein Schwellenwertunterschied ist, wobei der Unterschied die Verzerrung des Bildes (500, 600) im Vergleich zu dem Referenzbild (400) aufgrund der Anwesenheit von flüssigem Wasser auf dem infraroten grafischen Index (72) widerspiegelt, ferner umfassend ein Zufuhrventil, das betätigbar ist, um einen Wasserfluss zu der Filterpatrone (64) zu blockieren, wobei das Steuergerät (34) eingerichtet ist zum Schließen des Zufuhrventils als Reaktion auf die Bestimmung des Steuergeräts (34), dass die Filterpatrone (64) leckt, wobei das Steuergerät (34) eingerichtet ist zum Übertragen eines Leckalarms über eine Netzwerkschnittstelle (82) als Reaktion auf die Bestimmung des Steuergeräts (34), dass die Filterpatrone (64) leckt,
wobei der infrarote grafische Index (72) eine infrarotreflektierende Oberfläche und eine infrarotabsorbierende Oberfläche aufweist, wobei der infrarote grafische Index (72) eine infrarotreflektierende Tinte umfasst, die auf die Außenfläche (65) der Filterpatrone (64) gedruckt ist.

2. Leckdetektionssystem nach Anspruch 1, wobei der Leckalarm eine Textnachricht, E-Mail und/oder Telefonnachricht ist.

3. Leckdetektionssystem nach Anspruch 1, wobei das Steuergerät (34) dazu eingerichtet ist, als Reaktion auf die Bestimmung des Steuergeräts (34), dass die Filterpatrone (64) leckt, eine Benutzeralarmvorrichtung (84) zu aktivieren, wobei die Benutzeralarmvorrichtung (84) ein Lautsprecher und/oder ein Lichtemitter ist.

4. Leckdetektionssystem nach Anspruch 1, wobei das Referenzbild (400) in einem Speicher des Steuergeräts (34) gespeichert ist.

5. Verfahren zum Erkennen von Lecks in einem Wasserfilter, umfassend:
Erfassen eines Bildes (500, 600) eines infraroten grafischen Index (72) auf einer Außenfläche (65) einer Filterpatrone (64) mit einer Infrarotkamera (70);
Vergleichen des Bildes (500, 600) des infraroten grafischen Index (72) auf der Außenfläche (65) der Filterpatrone (64) mit einem Referenzbild (400) mit einem Steuergerät (34), wobei das Referenzbild (400) ein von der Infrarotkamera (70) aufgenommenes Bild des infraroten grafischen Index (72) auf der Außenfläche (65) der Filterpatrone (64) bei nicht leckender Filterpatrone (64) ist; und
Bestimmen, dass die Filterpatrone (64) leckt und flüssiges Wasser auf der Außenfläche (65) der Filterpatrone (64) vorhanden ist, wenn ein Unterschied zwischen dem Bild (500, 600) des infraroten grafischen Index (72) auf der Außenfläche (65) der Filterpatrone (64) und dem Referenzbild (400) größer als ein Schwellenwertunterschied ist, wobei der Unterschied die Verzerrung des Bildes (500, 600) im Vergleich zum Referenzbild (400) aufgrund der Anwesenheit von flüssigem Wasser auf dem infraroten grafischen Index (72) widerspiegelt, ferner umfassend Schließen eines Zufuhrventils, um einen Wasserfluss zu der Filterpatrone (64) zu blockieren, als Reaktion auf das Bestimmen des Steuergeräts (34), dass die Filterpatrone (64) leckt, ferner umfassend Übertragen eines Leckalarms über eine Netzwerkschnittstelle (82) als Reaktion auf das Bestimmen des Steuergeräts (34), dass die Filterpatrone (64) leckt,
wobei der infrarote grafische Index (72) eine infrarotreflektierende Oberfläche und eine infrarotabsorbierende Oberfläche aufweist, wobei der infrarote grafische Index (72) eine infrarotreflektierende Tinte umfasst, die auf die Außenfläche (65) der Filterpatrone (64) gedruckt ist.

6. Verfahren nach Anspruch 5, wobei der Leckalarm eine Textnachricht, E-Mail und/oder Telefonnachricht ist.

7. Verfahren nach Anspruch 5, ferner umfassend Aktivieren einer Benutzeralarmvorrichtung (84) als Reaktion auf das Bestimmen des Steuergeräts (34), dass die Filterpatrone (64) leckt,
wobei die Benutzeralarmvorrichtung (84) ein Lautsprecher und/oder ein Lichtemitter ist.

8. Verfahren nach Anspruch 5, wobei das Referenzbild (400) in einem Speicher des Steuergeräts (34) gespeichert ist.

## Revendications

1. Un système de détection de fuite pour un filtre à eau, comprenant:
une cartouche filtrante (64) avec un index graphique infrarouge (72) sur une surface externe (65) de la cartouche filtrante (64);
une caméra infrarouge (70) configurée pour capturer une image (500, 600) de l'index graphique infrarouge (72) sur la surface externe (65) de la cartouche filtrante (64); **caractérisé par**
un régulateur (34) en communication opérationnelle avec la caméra infrarouge (70), le régulateur (34) configuré pour comparer l'image (500, 600) de l'index graphique infrarouge (72) sur la surface externe (65) de la cartouche filtrante (64) à une image de référence (400), l'image de référence (400) étant une image de l'index graphique infrarouge (72) sur la surface externe (65) de la cartouche filtrante (64) de la caméra infrarouge (70) lorsque la cartouche filtrante (64) n'est pas en train de fuir pas, le régulateur (34) est configuré en outre pour déterminer si la cartouche filtrante (64) est en train de fuir et si de l'eau liquide est présente sur la surface externe (65) de la cartouche filtrante (64) lorsqu'une différence entre l'image (500, 600) de l'index graphique infrarouge (72) sur la surface externe (65) de la cartouche filtrante (64) et l'image de référence (400) est supérieure à un seuil de différence, ladite différence reflétant la distorsion de l'image (500, 600) par rapport à l'image de référence (400) en raison de la présence de l'eau liquide sur l'index graphique infrarouge (72), comprenant en outre une vanne d'alimentation actionnable pour bloquer un écoulement d'eau vers la cartouche filtrante (64), le régulateur (34) configuré pour fermer la vanne d'alimentation en fonction du régulateur (34) déterminant si la cartouche filtrante (64) est en train de fuir, dans lequel le régulateur (34) est configuré pour transmettre une alerte de fuite via une interface réseau (82) en fonction du régulateur (34) qui détermine si la cartouche filtrante (64) est en train de fuir,
dans lequel l'index graphique infrarouge (72) comprend une surface réfléchissante infrarouge et une surface absorbante infrarouge, dans lequel l'index graphique infrarouge (72) comprend une encre réfléchissante infrarouge imprimée sur la surface externe (65) de la cartouche filtrante (64).

2. Le système de détection de fuite selon la revendication 1, dans lequel l'alerte de fuite est un ou plusieurs SMS, courriels et messages téléphoniques.

3. Le système de détection de fuite selon la revendication 1, dans lequel le régulateur (34) est configuré pour activer une alarme d'utilisateur (84) en fonction du régulateur (34) qui détermine si la cartouche filtrante (64) est en train de fuir,
dans lequel l'alarme d'utilisateur (84) est un ou plusieurs haut-parleurs et
émetteurs de lumière.

4. Le système de détection de fuite selon la revendication 1, dans lequel l'image de référence (400) est stockée dans une mémoire du régulateur (34).

5. Un procédé de détection de fuite dans un filtre à eau, comprenant:
capturer d'une image (500, 600) d'un index graphique infrarouge (72) sur une surface externe (65) d'une cartouche filtrante (64) avec une caméra infrarouge (70) ;
comparer l'image (500, 600) de l'index graphique infrarouge (72) sur la surface externe (65) de la cartouche filtrante (64) à une image de référence (400) avec un régulateur (34), l'image de référence (400) étant une image de l' index graphique infrarouge (72) sur la surface externe (65) de la cartouche filtrante (64) de la caméra infrarouge (70) lorsque la cartouche filtrante (64) n'est pas en train de fuir; et
déterminer si la cartouche filtrante (64) est en train de fuir et si de l'eau liquide est présente sur la surface externe (65) de la cartouche filtrante (64) lorsqu'une différence entre l'image (500, 600) de l'index graphique infrarouge (72) sur la surface externe (65) de la cartouche filtrante (64) et l'image de référence (400) est supérieure à une différence de seuil, ladite différence reflétant la distorsion de l'image (500,600) par rapport à l'image de référence (400) en raison de la présence de l'eau liquide sur l'index graphique infrarouge (72), comprenant en outre la fermeture d'une vanne d'alimentation pour bloquer un écoulement d'eau vers la cartouche filtrante (64) en fonction du régulateur (34) qui détermine si la cartouche filtrante (64) est en train de fuir, comprenant en outre la transmission d'une alerte de fuite via une interface réseau (82) en fonction du régulateur (34) qui détermine si la cartouche filtrante (64) est en train de fuir,
dans lequel l'indice graphique infrarouge (72) comprend une surface réfléchissante infrarouge et une surface absorbante infrarouge, dans lequel l'indice graphique infrarouge (72) comprend une encre réfléchissante infrarouge imprimée sur la surface externe (65) de la cartouche filtrante (64).

6. Le procédé selon la revendication 5, dans lequel l'alerte de fuite est un ou plusieurs SMS, courriels et messages téléphoniques.

7. Le procédé selon la revendication 5, comprend en outre l'activation d'une alarme d'utilisateur (84) en fonction du régulateur (34) qui détermine si la cartouche filtrante (64) est en train de fuir.
dans lequel l'alarme d'utilisateur (84) est un ou plusieurs haut-parleurs et
émetteurs de lumière.

8. Le procédé selon la revendication 5, dans lequel l'image de référence (400) est stockée dans une mémoire du régulateur (34).
